Europäisches Patentamt

European Patent Office

Office européen des brevets

(11) Veröffentlichungsnummer: **0 255 696**
**A2**

(12) **EUROPÄISCHE PATENTANMELDUNG**

(21) Anmeldenummer: 87111010.2

(51) Int. Cl.⁴: **C12H 1/06**

(22) Anmeldetag: 29.07.87

(30) Priorität: 04.08.86 DE 3626378

(43) Veröffentlichungstag der Anmeldung:
10.02.88 Patentblatt 88/06

(84) Benannte Vertragsstaaten:
**BE DE FR GB IT NL**

(71) Anmelder: **Anton Steinecker Maschinenfabrik GmbH**
**Münchenerstrasse 18**
**D-8050 Freising(DE)**

(72) Erfinder: **Beer, Christian Diplom-Braumeister**
**Peter- und Paul Strasse 21**
**D-7070 Schäbisch Gmünd(DE)**
Erfinder: **Redl, Simon**
**Dr.-Georg-Schranner-Strasse 6**
**D-8309 Reichertshausen(DE)**
Erfinder: **Stippler, Kurt, Dr. Dipl.-Ing. für Brauwesen**
**Lauberg 1**
**D-8051 Marzling(DE)**

(74) Vertreter: **Patentanwälte Grünecker,**
**Kinkeldey, Stockmair & Partner**
**Maximilianstrasse 58**
**D-8000 München 22(DE)**

(54) Verfahren und Filtermaterial zur Anschwemmfiltration von Getränken.

(57) Ein Verfahren für die Anschwemmfiltration von Getränken, insbesondere von Bier, bei welchem ein chemisch regenerierbares Filtermaterial, vorzugsweise pulverförmiges Aluminiumoxid, verwendet wird.

EP 0 255 696 A2

## Verfahren und Filtermaterial zur Anschwemmfiltration von Getränken

Die Erfindung betrifft ein Verfahren zur Anschwemmfiltration von Getränken, insbesondere von Bier, sowie ein für dieses Verfahren geeignetes Filtermaterial. Insbesondere bezieht sich die Erfindung auf das Filtrieren von Bier mit Hilfe von Anschwemmfiltern unter Verwendung eines keramischen Filtermaterials.

Es ist üblich, Getränke, insbesondere aus natürlichen Ausgangsstoffen hergestellte Getränke, wie Bier, Wein und Obstsaft, vor dem Abfüllen zu filtrieren. Bei Bier ist eine solche abschließende Filtration erforderlich, um das ausstoßreife Bier, das trotz seiner langen und kalten Klärzeit durch nicht völlig sedimentierte Hefe-und Bakterienzellen sowie durch Trubteilchen stets noch schwach getrübt ist, vor dem Abfüllen "glanzfein", d.h., blank und biologisch haltbar zu machen.

Für das Filtrieren von Bier werden gegenwärtig überwiegend Kieselgur-Anschwemmfilter sowie Schichtenfilter benutzt. Bei der Anschwemmfiltration wird vor Filtrationsbeginn auf einer Stützfläche (Filtergewebe) eine Kieselgur-Vorschicht angeschwemmt. Nach Anschwemmen dieser Vorschicht wird dem zu filtrierenden Bier (Unfiltrat) ein Gemisch aus feiner und grober Kieselgur zudosiert. Bei der Bierproduktion muß mit einem Kieselgurverbrauch von 150 bis 200 g/hl Bier gerechnet werden. Weltweit ergibt sich für die Brauindustrie ein Jahresbedarf von ca. 145 000 t Kieselgur.

Unter Kieselgur werden in Jahrtausenden abgelagerte Sedimente von Kieselpanzern einzelliger Kieselalgen verstanden. Für die Anschwemmfiltration hat sich Kieselgur besonders bewährt wegen ihres großen Porenvolumens, niedrigen Schüttgewichtes, hoher Saugfähigkeit und ihrer großen spezifischen Oberfläche. Handelsübliche gebrannte Kieselgursorten bestehen aus 85 bis 87 % $SiO_2$, 2 bis 5 % $Al_2O_3$, 3 bis 10 % $Fe_2O_3$ und 0,2 bis 1,0 % CaO. Das Wasseraufnahmevermögen beträgt bei diesen gebrannten Kieselgursorten 200 bis 380 % bei einer spezifischen Oberfläche von 13 bis 20 m²/g.

Wegen des hohen $SiO_2$-Anteils ist Kieselgur chemisch weitgehend widerstandsfähig und wird nur von Flußsäure und Alkalien angegriffen.

Ist die Kieselgur nach einer Anzahl· von Filterbetriebsstunden durch zurückgehaltenes Feststoffmaterial einschließlich Hefen und Bakterien in ihrer Wirksamkeit verbraucht, was sich durch Verminderung der Filterleistung und durch einen starken Anstieg des Filterdruckes bemerkbar macht, so wird die Kieselgur von den Stützflächen der Filter entfernt und durch frische Guren ersetzt.

Die Beseitigung der beträchtlichen Mengen an zu Filtrationszwecken nicht mehr brauchbarer Kieselgur stellt die Brauereien vor beträchtliche Probleme. Das Deponieren dieser verbrauchten Kieselguren ist aufgrund gesetzlicher Vorschriften nur noch mit Schwierigkeiten und beträchtlichem Kostenaufwand möglich. Die früher verbreitete Praxis, verbrauchte Kieselgur als Tierfutter-Zusatzmittel zu verbrauchen, ist gesetzlich nunmehr weitgehend eingeschränkt.

Versuche, die als Filtermaterial unbauchbar gewordenen Kieselguren wieder zu regenerieren, d.h., für die Wiederverwendung als Filtermaterial von anhaftenden Feststoffteilchen zu befreien, erwiesen sich in der Praxis als nicht durchführbar. Erfolgreich verlief lediglich eine zu Regenerierungszwecken durchgeführte Glühbehandlung. Nach einer solchen Glühbehandlung zeigte sich jedoch die Kieselgur als deutlich verändert gegenüber ihrem ursprünglichen Zustand. Insbesondere führte die Glühbehandlung zu einer drastischen Verminderung der spezifischen Oberfläche und damit des Porenvolumens.

Eine Regenerierung verbrauchter Kieselguren - scheitert auch daran, daß zu Filtrationszwecken eine Vielzahl von Gursorten verwendet wird. Nach einer gegebenenfalls möglichen Befreiung solcher Gurteilchen von anhaftenden Feststoffen würden die derart regenerierten Gurteilchen größenmäßig unklassiert vorliegen und somit für eine Wiederverwendung, welche größenmäßig sortiertes Filtermaterial verlangt, nur bedingt brauchbar sein. In diesem Zusammenhang sei erwähnt, daß die meisten Filtrationsaufgaben mindestens zwei Sorten Gur, z.B. Fein-und Grobgur, erfordern. Ferner steht es einer Regenerierung verbrauchter Kieselguren entgegen, daß dieser Werkstoff aus zumindest seinen beiden Hauptkomponenten $SiO_2$ und $Al_2O_3$ besteht. Nach einer gegebenenfalls erfolgreichen Befreiung der Kieselgur von anhaftenden Teilchen ist damit zu rechnen, daß die $SiO_2$-Teilchen einerseits und die $Al_2O_3$-Teilchen andererseits in einer unvorhersehbaren, örtlich gegebenenfalls völlig unterschiedlichen Mengenverteilung vorliegen, so daß eine solcher Art regenerierte Kieselgur als alleiniges Filtermaterial nicht verwendet werden kann.

Ferner ist zu bedenken, daß Kieselgur als natürlicher Werkstoff in äußerst unterschiedlichen Formen, insbesondere äußerst unterschiedlichen Teilchengrößen vorkommt. Handelsüblich sind lediglich die bereits genannten Klassierungen in feine, mittlere und grobe Kieselguren.

Die eingangs erwähnten Schichtenfilter bestehen in der Regel aus einem Gemisch aus Zellstoffen und einem Zusatzstoff von hoher Absorptionwirkung. Ein solcher Zusatzstoff kann aus Aluminiumoxid bestehen bzw. Aluminiumoxid enthalten (DE-OS 25 10 467). Wenn die bekannten Filterschichten unbrauchbar geworden sind, werden sie verworfen.

Der Erfindung liegt die Aufgabe zugrunde, das Anschwemmfiltrieren von Getränken, insbesondere von Bier, unter Verwendung eines keramischen Filtermaterials so auszugestalten, daß eine gleichermaßen umweltfreundliche und kostengünstige Entsorgung des verbrauchten Filtermaterials gewährleistet ist.

Diese Aufgabe wird bei einem Verfahren der im Oberbegriff des Anspruchs 1 angegebenen Gattung dadurch gelöst, daß ein zum Zwecke der Wiederverwendung chemisch regenerierbares Filtermaterial verwendet wird.

Der mit Hilfe der Erfindung erzielbare technische Vorteil ergibt sich in erster Linie daraus, daß eine chemische Regenerierung, d.h. ein chemisches Entfernen der am gebrauchten Filtermaterial anhaftenden Feststoffteilchen einschließlich Hefen und Bakterien im Betrieb ohne weiteres durchgeführt werden kann. In der Regel sind in den Betrieben der Brauindustrie bereits chemische Regenerationsanlagen, wie beispielsweise solche zum Regenerieren von PVPP (Polyvinylpolypyrrolidon)vorhanden. Nach erfolgter Regenerierung kann das Filtermaterial wieder dem Prozeß der Anschwemmfiltration zugeführt werden.

Nach einer vorteilhaften Ausgestaltung der Erfindung wird als chemisch regenerierbares Filtermaterial $Al_2O_3$-Pulver, vorzugsweise ein vorherrschend aus $\alpha$-$Al_2O_3$-Pulver bestehendes Filtermaterial verwendet. Ein vorherrschend, beispielsweise mehr als 95 % $\alpha$-$Al_2O_3$ enthaltendes Filtermaterial verfügt über keine praktisch verwertbaren positiven elektrischen Ladungen.

Handelsübliches Aluminiumoxid mit mehr als 95 % $\alpha$-Anteil besteht zu 99,2 bis 99,4 % aus $Al_2O_3$, Rest im wesentlichen $SiO_2$.

Für die Zwecke der Erfindung geeignetes handelsübliches Aluminiumoxid läßt sich in sehr feinklassierten Körnungen erhalten, so daß es bei der Regenerierung ausgeschlossen ist, daß körnungsmäßig unwillkommene Zufallsverteilungen auftreten. Vorzugsweise wird Aluminiumoxid mit einer spezifischen Oberfläche von 0,5 bis 6 m²/g, insbesondere von 0,7 bis 1,2 m²/g verwendet.

Im Vergleich zu den üblicherweise verwendeten gebrannten Kieselguren mit einer spezifischen Oberfläche von 13 bis 20 m²/g ist die vorstehend genannte spezifische Oberfläche des Aluminiumoxids geringer. Hierin dürfte ein Grund dafür zu sehen sein, daß die Fachwelt bislang Aluminiumoxid nicht als alleiniges Filtermaterial verwendet hat.

Überraschenderweise wurde von der Anmelderin jedoch gefunden, daß die Filterleistung eines erfindungsgemäß als Filtermaterial lediglich Aluminiumoxid aufweisenden Anschwemmfilters in keiner Weise hinter der Filterleistung von mit Kieselgur beaufschlagten Anschwemmfiltern zurücksteht.

Nach einer bevorzugten Ausführungsform der Erfindung wird das Filtermaterial mit Hilfe einer Alkalilauge und anschließend mit Hilfe einer zu Neutralisationszwecken zugesetzten Säure regeneriert.

Typischerweise wird bei der Durchführung des erfindungsgemäßen Verfahrens nach Abschluß des Filtrationsvorganges die filtrierte Flüssigkeit, also vorzugsweise Bier, mit Hilfe von $CO_2$ aus dem Filter gedrückt. Anschließend erfolgt die chemische Regenerierung mittels Lauge und mittels einem sich anschließendem Neutralisationsvorgang. Diese chemische Regeneration kann im Filter, also in Form eines Durchlaufverfahrens erfolgen, kann aber auch außerhalb des Filters durchgeführt werden, d.h. nach Abspülen der Filtermittelanschwemmschichten von der Stützfläche. Zu diesem Zweck wird das unbrauchbar gewordene Filtermaterial mittels Zentrifugalkraft abgeschleudert und aus dem Filter hinaus in ein Regenerationsgefäß hineingegeben, wo es mit Lauge regeneriert wird. Diese Lauge wird mit Hilfe eines Preßsystems abfiltriert, worauf sich eine Neutralisationsbehandlung mit einer geeigneten Säure anschließt. Vorzugsweise wird als Lauge eine maximal 10 %ige, vorzugsweise 5 %ige, Natronlauge (NaOH) und als Säure eine schwache Salpetersäure ($HNO_3$) mit einer Konzentration von etwa 1 bis 3 % verwendet. Sollte das chemische regenerierbare Filtermaterial nach einer Vielzahl von Regenerierungen seine Regenerierungsfähigkeit zumindest teilweise verloren haben, so kann dieses erschöpfte Filtermaterial in bereits vorhandenen Wiederaufbereitungsanlagen wieder regenerationsfähig gemacht werden. Wie gesagt, sind solche Wiederaufbe reitungsanlagen bereits in Betrieb.

Aluminiumoxid hat sich als besonders geeignetes chemisches Filtermaterial erwiesen, da es chemisch im wesentlichen aus einem einzigen Stoff ($Al_2O_3$) besteht und in sowohl hinsichtlich Körnungsverteilung als auch hinsichtlich geometrischer Gestalt seiner Teilchen sehr homogener Klassierung im Handel angeboten wird. Deshalb ist bei der Verwendung von Aluminiumoxid nicht zu befürchten, daß das Material nach dem Regenerieren in einem Zustand vorliegt, der deutlich von dem Zustand vor der ersten Verwendung abweicht.

## Ansprüche

1. Verfahren zur Anschwemmfiltration von Getränken, insbesondere von Bier, unter Verwendung eines keramischen Filtermaterials,
dadurch **gekennzeichnet,**
daß ein zum Zwecke der Wiederverwendung chemisch regenerierbares Filtermaterial verwendet wird.

2. Verfahren nach Anspruch 1, dadurch gekennzeichnet, daß als Filtermaterial ein handelsübliches Aluminiumoxid-Pulver verwendet wird.

3. Verfahren nach Anspruch 1 oder 2, dadurch gekennzeichnet, daß als Filtermaterial ein vorherrschend aus $\alpha$-$Al_2O_3$ bestehendes Aluminiumoxid-Pulver verwendet wird.

4. Verfahren nach Anspruch 2 oder 3, dadurch gekennzeichnet, daß Aluminiumoxid mit einer spezifischen Oberfläche von 0,5 bis 6 m²/g, vorzugsweise von 0,7 bis 1,2 m²/g verwendet wird.

5. Verfahren nach einem der Ansprüche 1 bis 4, dadurch gekennzeichnet, daß das Filtermaterial mittels Alkalilauge und einem sich anschließenden Neutralisationsvorgang mittels Säure regeneriert wird.

6. Verfahren nach einem der Ansprüche 1 bis 5, dadurch gekennzeichnet, daß als Lauge eine maximal 10 %ige, vorzugsweise 5 %ige, Natronlauge und als Säure eine schwache (ca. 1-3%ige Salpetersäure) verwendet wird.

7. Chemisch regenerierbares Filtermaterial für Getränke, bestehend aus Aluminiumoxid-Pulver.